# EUROPÄISCHE PATENTANMELDUNG

(11) **EP 2 338 724 A1**
(43) Veröffentlichungstag der Anmeldung: **29.06.2011**
(21) Anmeldenummer: 10196949.1
(22) Anmeldetag: 23.12.2010
(51) Int. Cl.: B60N 2/06, B60N 2/14, B60N 2/50, B60N 2/54

(54) **Sitzfederung für Fahrzeuge, insbesondere für Krankenfahrstühle**

(30) Priorität: 23.12.2009 DE 202009014921 U
(71) Anmelder: Kemper, Ralf, 41844 Wegberg (DE)
(72) Erfinder: Kemper, Ralf, 41844 Wegberg (DE)
(74) Vertreter: Bonsmann, Joachim Bernhard

(57) **Zusammenfassung**

Bei einer Sitzfederung, insbesondere für Fahrzeugsitze (1) von motorbetriebenen Krankenfahrstühlen, bei denen der Fahrzeugsitz (1) mit oder ohne Rahmengestell sowie um 360° drehbar ausgebildet ist, sind ein oder mehrere, vorzugweise mindestens zwei vordere elastomer ausgebildete Auflager (3) vorgesehen, die keine starr geführte Achse aufweisen und durch ihre Bauart federnd und dämpfend zugleich wirken. Bevorzugt sind weiterhin im hinteren Bereich zwei weitere elastomere Pufferelemente (2) vorgesehen, die ringförmig mit optionalen Inserts (5) ausgebildet sein können.

## Beschreibung

Personen, die durch körperliche Einschränkung für die Überwindung von Distanzen auf Mobilitätshilfen angewiesen sind oder durch Nutzung dieser eine deutliche Erleichterung erfahren, ist daran gelegen, diese Distanzen auch beschwerdefrei zu überwinden. Diese Personen klagen oft über Rückenschmerzen, die nicht nur auf die Tatsache der körperlichen Einschränkung zurückzuführen sind, sondern aus der daraus resultierenden geringen Möglichkeit, die natürliche Muskulatur ausreichend zu stärken, um schmerzfrei sein zu können.

Motorbetriebene Krankenfahrstühle (nachfolgend Mobilitätshilfen genannt) im Sinne der deutschen Verordnung über die Zulassung von Fahrzeugen zum Straßenverkehr (FZV) § 2 Abs.13 sind Fahrzeuge, die nach den aktuellen Vorschriften elektromotorisch angetrieben sind und bestimmte Parameter einhalten müssen, um als solche anerkannt zu werden.

Die Bandbreite der Mobilitätshilfen ist hierbei sehr breit gefächert; von kleinsten Mobilitätshilfen zur Mitnahme in Fahrzeugen / ÖPNV oder auf Reisen bis zu Mobilitätshilfen, die an die zulässige Gesamtmasse von nicht mehr als 500 kg heranreichen. Konstruktiv bedingt weisen insbesondere Mobilitätshilfen, die zur Mitnahme auf Reisen in KFZ, ÖPNV, Flugzeug usw. gedacht sind, häufig folgende Merkmale auf: Leicht, kompakt, geringe Reichweite (geringe Batteriekapazität), geringer Reifendurchmesser (Vollgummireifen) und damit allerdings auch eher geringer Komfort.

Gerade portable Mobilitätshilfen weisen somit Nachteile auf, die in der leichten Handhabung solcher Mobilitätshilfen begründet sind. Geringes Gewicht und geringe Maße sind hierbei die konstruktiven Merkmale, die im Pflichtenheft für diese Produktreihen im Vordergrund stehen. Dabei leidet notgedrungen der Komfort. Maßnahmen, die bei größeren Modellen durch den Einsatz leistungsstärkerer Batterien zum Teil kompensiert werden können (wie zum Beispiel Luftbereifung), entfallen zugunsten der Anforderung hinsichtlich Mindestreichweiten und Gewicht.

Gesucht wurde eine Möglichkeit, diesen fehlenden Komfort durch geeignete Maßnahmen zu erreichen und im günstigsten Fall nachrüstbar zu machen, ohne weitere Einschränkungen der Fahrzeugparameter befürchten zu müssen.

Der vorliegenden Erfindung liegt als Aufgabe die Schaffung einer Sitzfederung zugrunde welche leicht, mit geringer Bauhöhe und hohem nutzbarem Federungsverhältnis und zudem jederzeit für vorhandene Fahrzeugsitze der Krankenfahrstühle nachrüstbar sein sollte.

Diese Aufgabe wird mit einer Federung mit den Merkmalen des Anspruches 1 gelöst. Vorteilhafte Ausgestaltungen ergeben sich aus den Unteransprüchen.

Die Erfindung geht von bisher verwendeten Sitzen aus, die primär für Krankenfahrstühle gefertigt werden und insbesondere durch ihre um 360° drehbare Lagerung ein gemeinsames Merkmal aufweisen. Dies ist für das leichtere Auf- und Absteigen des Fahrers ein Merkmal, welches sich im Laufe der Entwicklung dieser Fahrzeugtypen als sinnvoll erwiesen hat. Diese Sitze sind entsprechend der unterschiedlichen Fahrzeuggrößen in ihrer Ausstattung, insbesondere im Komfort durch Federung und Dämpfung (Schaumstoffauflagen) angepasst. Bei kleineren und mittleren Fahrzeuggrößen ist dagegen der Komfort durch geringe Schaumstoffauflagen stark eingeschränkt bis nicht vorhanden. Besonders diese portablen Mobilitätshilfen weisen entsprechende Nachteile im Komfort auf, die in der leichten Handhabung solcher Mobilitätshilfen begründet liegen. Durch den (nachträglichen) Einbau einer zusätzlichen Sitzfederung im Rahmen der vorliegenden Erfindung gewinnen diese maßgeblich am Komfort.

Durch den (nachträglichen) Einbau einer Sitzfederung, die mit ihrer Bauhöhe mehr als 50% Federweg der Bauhöhe ermöglicht, wird dieser Komfort wieder hergestellt.

Wichtig ist hierbei, dass die Sitzfläche Stöße von unten, z.B. Überfahren von Absätzen, aber auch seitlich eingeleitete Kräfte, abfedern und dämpfen kann. Dies wird durch bekannte Sitze aus dem Automobilbereich nicht vergleichbar realisiert, da die Krankenfahrstühle im Gegensatz zu den Automobilen nur über geringe Differenzen von gefederter und ungefederter Masse verfügen und somit die eingeleiteten Kräfte auf den Fahrer ungleich stärker einwirken. Somit ist eine gesonderte Fixierung der Sitzfläche zum Sitzgestell notwendig. Ferner sollte eine leichte Anpassung im Hinblick auf das Fahrergewicht möglich sein.

Dies wird vorzugsweise zum einen durch den Einsatz von z.B. Gummipuffern (Niederfrequenzlagern) im vorderen Bereich realisiert, um einen in Grenzen schwingenden und federnden/dämpfenden Drehpunkt zu realisieren. Hierbei wird dieser, der Belastung entsprechend, hinsichtlich seiner Form, Größe und Shore-Härte ausgewählt.

Ferner werden vorzugsweise hintere Elemente verwendet, die aufgrund ihrer Ausführung durch Module oder Inserts, die zusätzlich eingebracht werden können, leicht an die sich ändernden Bedürfnisse der Nutzer anzupassen sind. Zum Einen sind diese Niederfrequenzlager in ihrer Ausführung selbstfedernd und dämpfend aus entsprechendem Material gefertigt, zum Anderen kann diese Eigenschaft durch konstruktive Anpassung geändert werden (Materialzusammensetzung, Wandstärke, Durchmesser, usw.).

Primär sind diese Module aber aus z.B. geschäumten Kunststoffen / Gummielementen gestaltet, um eine kostengünstige Herstellung und eine einfache Handhabung sicherzustellen.

Eine andere Ausführung der Module bzw. Inserts, die sich durch unterschiedliche Feder- und Dämpfungseigenschaften auszeichnen, ist auch als geschlossener flexibler Hohlkörper vorstellbar, der durch eine Füllung (Gase, Flüssigkeiten) und weiterhin denkbaren Ausgleichsbehältern ähnlich den bekannten Stoßdämpfern arbeitet.

Die erfindungsgemäße Federung kann auch bei anderen Fahrzeugen eingesetzt werden, beispielsweise bei Fahrzeugsitzen von Rasenmähern, Traktoren, Baumaschinen, Motorrädern od. dgl., aber grundsätzlich auch bei Nicht-Fahrzeugapplikation, wie z.B. in Zusammenhang mit Bürostühlen.

Beispielhafte Ausführungsformen der vorliegenden Erfindung sind in den beigefügten Zeichnungen dargestellt und werden in der nachfolgenden Beschreibung näher erläutert.

Es zeigen:
- Fig. 1: eine schematische Explosionsdarstellung eines Sitzes mit für den nachträglichen Einbau geeigneten vorderen und hinteren Gummipuffern bei einem Fahrzeugsitz mit einem Sitzgestell ohne Längenverstellung, und
- Fig. 2: eine schematische Explosionsdarstellung eines Sitzes mit für den nachträglichen Einbau geeigneten vorderen und hinteren Gummipuffern bei einem Fahrzeugsitz mit einem Sitzgestell mit Längenverstellung.

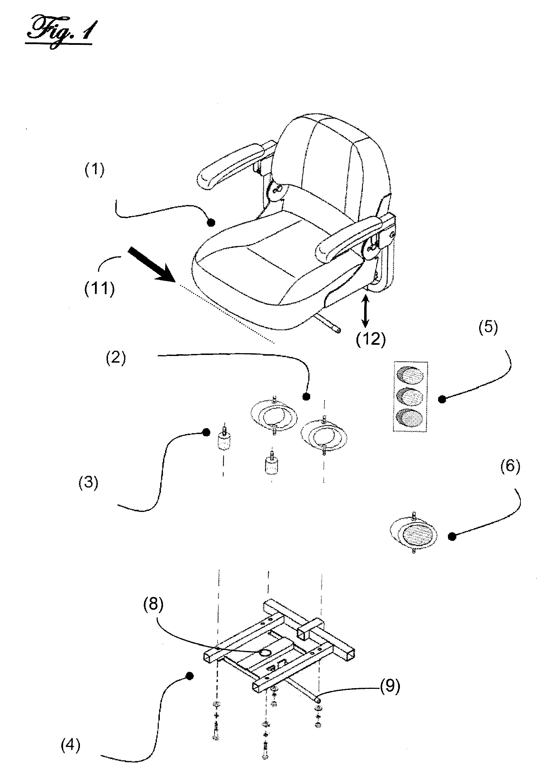

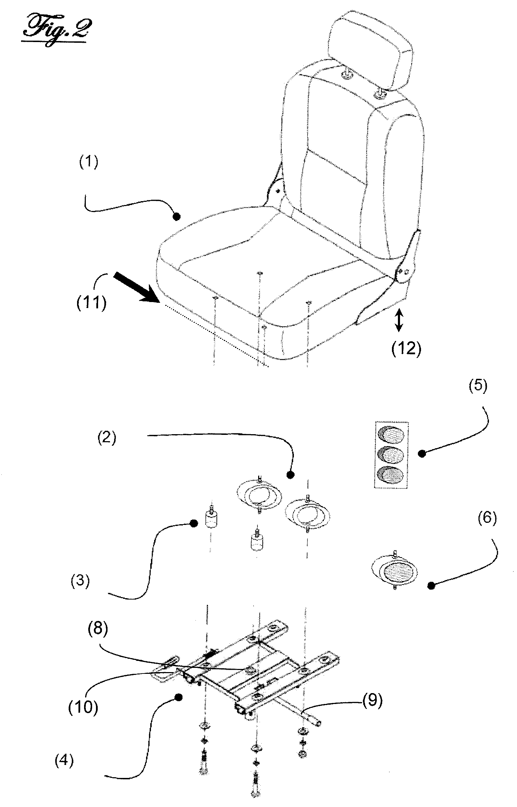

In den Figuren 1 und 2 ist jeweils in Explosionsdarstellung schematisch ein für motorbetriebene Krankenfahrstühle gebräuchlicher Fahrzeugsitz 1 dargestellt. Dieser wird gemäß dem Stand der Technik auf einem Sitzgestell 4 mittels in der Regel vier Befestigungselementen, insbesondere Schrauben, fixiert. Das Sitzgestell 4 ist wiederum mit dem (nicht dargestellten) Fahrgestell über eine zentrale Achse 8 verbunden, die mittels eines Bedienhebels 9 freigegeben werden kann, so dass der Fahrzeugsitz um bis zu 360° verschwenkt werden kann.

Bei der Ausführungsform gemäß Figur 2 ist gegenüber Figur 1 zusätzlich noch eine Verstellmöglichkeit für die Längsposition des Sitzes mittels Schienen unter Zuhilfenahme eines Verstellhebels 10 gegeben.

Im Rahmen der Erfindung werden zumindest im vorderen Bereich zwischen dem Sitzgestell 4 und dem Fahrzeugsitz 1 elastische Puffer 3 angebracht, die bevorzugt aus Gummi oder einem anderen elastomeren Material ausgebildet sind. Diese wirken als Niederfrequenzlager, um einen in Grenzen schwingenden und federnden/dämpfenden Drehpunkt zu realisieren. Die Puffer 3 sind bevorzugt zylindrisch ausgebildet und weisen oben und unten einvulkanisierte oder eingegossene Verbindungselemente (Gewinde, Schraube) auf, wobei keine durchgehende Achse in den Puffern vorgesehen ist, oder sind direkt - z.B. mittels einer Klammer - mit dem Sitzgestell und/oder dem Fahrzeugsitz verbunden, so dass die Puffer 3 - je nach Shore-Härte - in geringem Umfang horizontale, vertikale sowie Schwenkbewegungen ausführen können. Die Puffer können aus einen Hart- oder Weichgummi oder auch aus einem geschäumten Kunststoffmaterial bestehen.

Ferner sind hintere Pufferelemente 2 vorgesehen. Diese sind in der dargestellten Ausführungsform ringförmig, vorzugsweise elliptisch, ausgebildet und an der Ober- und Unterseite mit den jeweiligen Berührungsflächen an dem Fahrzeugsitz 1 bzw. an dem Sitzgestell 4 befestigt. Die hinteren Pufferelemente bestehen bevorzugt ebenfalls aus Gummi oder einem sonstigen Kunststoff. Durch schematisch dargestellte Module, sog. "Inserts" 5, die in die ringförmigen Pufferelemente eingesteckt werden, können diese leicht (d.h. ohne Demontage der Pufferelemente) an die sich ändernden Bedürfnisse der Nutzer (Gewicht, Komfortbedürfnis) etc. angepasst werden. Ein mit einem Insert 5 versehenes Pufferelement 2 ist in den Figuren beispielhaft dargestellt und mit der Bezugsziffer 6 gekennzeichnet. Der Einsatz von Inserts 5 ist nicht zwingend, da die Niederfrequenzlager 2 in ihrer Ausführung selbstfedernd und dämpfend aus entsprechendem Material gefertigt sind, und diese Eigenschaften durch konstruktive Anpassung geändert werden können (Materialzusammensetzung, Wandstärke, Durchmesser, usw.). Typische Höhen für derartige ringförmige Puffer liegen im Bereich von ca. 50 mm, wobei bei einem derartigen Puffer ein maximaler Federweg von ca. 43 mm realisierbar ist.

Durch die ringförmige Bauart bzw. die Flächenträgheitsmomente der Pufferelemente 2 wird einem seitlichen Verschieben entgegengewirkt; vielmehr bewegen sich die Elemente 2 bevorzugt vertikal.

Insgesamt ergibt sich durch das Zusammenspiel der vorderen und der hinteren Pufferelemente eine Art Scharnierwirkung der vorderen Pufferelemente 3, auch wenn diese in geringerem Maße Stöße in vertikaler Richtung abfangen können. Die hinteren ringförmigen Pufferelemente 2 wirken im Wesentlichen in vertikaler Richtung wie eine Feder, was mit der Verteilung des Körpergewichtes auf dem Fahrzeugsitz korrespondiert. Dadurch ergibt sich eine Schwenkbewegung des Fahrzeugsitzes 1 in etwa um eine mit 11 bezeichnete gedachte Achse aufgrund der mit dem Pfeil 12 symbolisierten Auf- und Abbewegung der hinteren Pufferelemente 2. Hierdurch werden Erschütterungen wirksam unterdrückt und gleichzeitig für den Benutzer unangenehme seitliche oder nach vorne wirkende Kippbewegungen weitgehend vermieden, so dass ein Verrutschen oder gar Abrutschen der auf dem Fahrzeugsitz 1 befindlichen Person sicher verhindert wird.

Insgesamt werden die Pufferelemente 2, 3 damit zusätzlich zu den üblichen Befestigungselementen für den Fahrzeugsitz 1 eingesetzt, so dass eine nachträgliche Montage einfach möglich ist. Da die elastomeren Pufferelemente 2, 3 - im Gegensatz zu konventionellen federbasierten Stoßdämpfern ―eine nur geringe Bauhöhe benötigen, wird die Sitzhöhe des Fahrers durch die zusätzliche Federung nur geringfügig beeinflusst. Diese durch die Dämpfungselemente bedingte Änderung der Sitzhöhe kann bei den üblichen Krankenfahrstühlen durch vorhandene Verstelleinrichtungen wieder ausgeglichen werden.

## Patentansprüche

1. Sitzfederung, insbesondere für Fahrzeugsitze (1) für motorbetriebene Krankenfahrstühle, wobei der Fahrzeugsitz (1) mit oder ohne Rahmengestell sowie vorzugsweise um 360° drehbar ausgebildet ist,
**dadurch gekennzeichnet, dass**
ein oder mehrere, vorzugweise mindestens zwei, vordere, bevorzugt elastomer ausgebildete Auflager (3) vorgesehen sind, die keine starr geführte Achse aufweisen und durch ihre Bauart federnd und dämpfend zugleich wirken.

2. Sitzfederung nach Anspruch 1,
**dadurch gekennzeichnet, dass**
ein oder mehrere, vorzugweise mindestens zwei, hintere Auflager (2) vorgesehen sind, die durch ihre Bauart oder ihre Flächenträgheitsmomente einem seitlichen Verschieben entgegenwirken und durch ihre Bauart federnd und dämpfend zugleich wirken.

3. Sitzfederung nach Anspruch 1 oder 2,
**dadurch gekennzeichnet, dass**
diese zum nachträglichen Einbau zwischen dem Sitzgestell (4) und dem eigentlichen Fahrzeugsitz (1) ausgebildet ist.

4. Sitzfederung nach einem der Ansprüche 1 bis 3,
**dadurch gekennzeichnet, dass**
diese durch zusätzliche Komponenten (5), insbesondere ein Insert, eine einfache Anpassung an die gewünschten Federungs- und Dämpfungseigenschaften ermöglicht.

5. Sitzfederung nach einem der Ansprüche 1 bis 4,
**dadurch gekennzeichnet, dass**
diese die Eigenschaft aufweist, Kräfte aus allen auftretenden Kraftrichtungen federnd zu dämpfen.

6. Sitzfederung nach einem der Ansprüche 1 bis 5,
**dadurch gekennzeichnet, dass**
sich diese insbesondere durch das geringe Gewicht der Baugruppe für die Sitzfederung hervorhebt und im Wesentlichen aus vier Hauptkomponenten besteht.

7. Komponente (5) für eine Sitzfederung nach einem der Ansprüche 1 bis 6,
**dadurch gekennzeichnet, dass**
diese in ihrer Konstruktion ähnlich aufgeschäumtem Materialen mit unterschiedlichen Eigenschaften in Härte, Federung und Dämpfung ausgebildet ist und/oder in sich geschlossen die Funktion bekannter Stoßdämpfer aufweist und/oder pneumatische und/oder hydraulische Funktionen beinhaltet.
